# EUROPEAN PATENT APPLICATION

(11) **EP 1 829 928 A1**
(43) Date of publication of application: **05.09.2007**
(21) Application number: 05799259.6
(22) Date of filing: 28.10.2005
(51) Int. Cl.: C08L 71/02, C08L 71/00, C08G 65/329, C08G 65/30, C08K 5/151

(54) **PROCESS FOR PRODUCTION OF POLYETHER POLYMERS AND COMPOSITIONS CONTAINING THE POLYMERS**

(30) Priority: 01.11.2004 JP 2004318603
(71) Applicant: Kaneka Corporation, Kita-ku Osaka-shi, Osaka 530-8288 (JP)
(72) Inventor: JONO, Hideharu, Akashi-shi, Hyogo 674-0092 (JP)
(74) Representative: Hart Davis, Jason
(86) International application number: PCT/JP2005/019856
(87) International publication number: WO 2006/049087

(57) **Abstract**

The invention aims at providing a simple and easy process for the treatment of metallic impurities contained in the polyether polymer to be subjected to hydrosilylation, which enables unproblematic progress of the subsequent hydrosilylation; and compositions obtained by the process. This aim is attained by a composition obtained by blending (A) a polyether which is prepared by polymerization with a double metal cyanide complex catalyst and contains the complex and/or residue compounds thereof with (B) ascorbic acid and/or a derivative thereof.

## Description

### TECHNICAL FIELD

The present invention relates to a production of hydrolyzable silicon group-containing polyether polymer.

### BACKGROUND ART

Use of a room-temperature hardening composition containing a polyether polymer containing hydrolyzable silicon groups and a silanol condensation catalyst, for example as sealant or adhesive, is well known and useful industrially. An example of the method of producing such a hydrolyzable silicon group-containing polyether polymer is to produce a polyether polymer having terminal OH groups, convert the terminal OH groups to olefins, and hydrosilylate the olefin with a hydrolyzable silicon group-containing hydrosilane compound.

However, if an oxidative impurity is present in the unsaturated group-containing polyether prepared by conversion of the terminal OH groups, the impurity inhibits the following hydrosilylation reaction in the method. For prevention of such a reaction inhibition known is a method of advancing the hydrosilylation reaction without problem by decomposing the oxidative impurity present in the unsaturated group-containing polyether with ascorbic acid (see Patent Document 1).

On the other hand, a method of polymerizing an alkyleneoxide by using an alkali metal catalyst, a metal porphyrin catalyst, a double metal cyanide complex catalyst or the like has been known as a method of producing polyether polymers having terminal OH groups. In such a polymerization method, the catalyst used in polymerization and the residue thereof are removed from the system by a method suitable for the system.

For example, a method of using a double metal cyanide complex gives a polymer having a number-average molecular weight of 8,000 or more and a narrow molecular weight distribution. A curable resin composition containing the hydrolyzable silicon group-containing polyether polymer prepared by such a method is useful, for making the hardened product more flexible, reducing the viscosity of the composition, and making the composition more processable.

Such double metal cyanide complexes have been removed, for example, by water extraction (see for example Patent Document 2), adsorption with adsorbent, or aggregation and filtration (see for example Patent Document 3).

Among the methods above, the water extraction is a method of allowing migration of metal impurities into water while bringing the polyether polymer into contact with water sufficiently and then separating the polyether polymer from water. However, vigorous agitation of the polyether polymer and water for sufficient contact results in emulsification of the system containing the polymer substance, demanding an extended period for separation of the polyether polymer from water and also a larger facility. Alternatively, gentle agitation for prevention of emulsification also caused a problem of insufficient extraction of metal impurities.

The methods of removing impurities by adsorbent and by aggregation and filtration include respectively an adsorption step and a step of filtering aggregated metal impurities. However, both methods demand a filtration step after the adsorption step and the aggregation step, which caused problems such as elongation of the period for filtration and difficulty of filtration due to clogging when the filter has a smaller pore diameter.

Patent Document 1: Japanese Unexamined Patent Publication No. 10-212349

Patent Document 2: Japanese Unexamined Patent Publication No. 2003-105079

Patent Document 3: Japanese Unexamined Patent Publication No. 03-088823

### Disclosure of the Invention

### Problems to be Solved by the Invention

The inventors have found a fact indicating that hydrosilylation of an unsaturated group-containing polyether is inhibited by a factor other than the oxidative impurity therein when the unsaturated group-containing polyether produced by using a polyether prepared by using a double metal cyanide complex as its precursor is hydrosilylated.

Specifically in the case of an unsaturated group-containing polyether obtained in polymerization reaction by using a double metal cyanide complex catalyst, the hydrosilylation reaction can be inhibited even if the content of the oxidative impurities is very small.

### Means to Solve the Problems

After studies on the reasons of and measures to the problem, it became obvious that the double metal cyanide complex and the residue compound could inhibit hydrosilylation reaction in the downstream step. Thus,conventional extraction,separation and removal of the double metal cyanide complex or the residue compound with water are a step essential not only for removal of undesirable impurities contained in the polymer but also for advancing the subsequent hydrosilylation reaction without difficulty.

According to the present invention, addition of ascorbic acid or the derivative thereof to a precursor polyether containing a double metal cyanide complex and/or the residue compound thereof or an unsaturated group-containing polyether containing unsaturated groups at the terminals is effective in preventing inhibition of the hydrosilylation reaction even without water extraction.

Accordingly, the present invention provides a simple method of treating metal impurities that allows progress of the hydrosilylation reaction of a polyether polymer containing metal impurities (double metal cyanide complex and the residue compound) without difficulty in the downstream step, and a composition obtained by the method.

Specifically, the present invention relates to:
(1) A composition, comprising a polyether (A) containing a double metal cyanide complex and/or the residue compound thereof that is prepared in polymerization by using a double metal cyanide complex as the catalyst and ascorbic acid and/or the derivative thereof (B);
(2) A composition, comprising an unsaturated group-containing polyether (C) having a polyether main chain prepared by using a double metal cyanide complex as the catalyst and containing the double metal cyanide complex and/or the residue compound thereof and ascorbic acid and/or the derivative thereof (B);
(3) The composition according to (1) or (2), wherein the amount of peroxides in the polyether before addition of the ascorbic acid and/or the derivative thereof (B) as determined by iodine-thiosulfate titration is 30 ppm or less;
(4) A method of producing a hydrolyzable silicon group-containing polyether (D) by preparing a polyether in polymerization by using a double metal cyanide complex as the catalyst, preparing an unsaturated group-containing polyether (C) by using the polyether as the precursor polyether, and hydrosilylating the unsaturated group-containing polyether (C) with a silane compound represented by the following General Formula (1), comprising a step of heating the unsaturated group-containing polyether (C) or the precursor polyether in the presence of ascorbic acid and/or the derivative thereof (B):

   H-(SiR²_{2-b}X_{b}O)ₘ-Si(R¹₃₋ₐ)Xₐ (1)

   (wherein, R¹ and R² each independently represent an alkyl group having 1 to 20 carbon atoms, an aryl group having 6 to 20 carbon atoms, an aralkyl group having 7 to 20 carbon atoms or a triorganosiloxy group represented by (R')₃SiO-; the multiple groups R¹ or R², when present, may be the same as or different from each other; R' represents a monovalent hydrocarbon group having 1 to 20 carbon atoms, and the three groups R' may be the same as or different from each other; X represents a hydroxyl or hydrolytic group; the two or more groups X, when present, may be the same as or different from each other; a is 0, 1, 2 or 3; b is 0, 1, or 2; the numbers b in m groups (SiR²_{2-b}X_{b}O) may be the same as or different from each other; m is an integer of 0 to 19. However, the following formula is satisfied: a+Sb=: 1);
(5) The production method according to (4), wherein the silane compound is a compound represented by the following General Formula (2):

   H-SiR¹_{3-c}X_{c} (2)

   (wherein, R¹, X is the same as that above; and c is 1, 2 or 3);
(6) The production method according to (4) or (5), wherein the unsaturated group-containing polyether (C) or the precursor polyether thereof is heated in the presence of ascorbic acid and/or the derivative thereof (B) at 20 to 150° C for 0 to 5 hours;
(7) The production method according to (4), (5) or (6), wherein the weight concentration of the ascorbic acid and/or the derivative thereof (B) when the unsaturated group-containing polyether (C) or the precursor polyether thereof is heated in the presence of ascorbic acid and/or the derivative thereof is 10 to 1, 000 ppm with respect to the total amount of the unsaturated group-containing polyether (C) and the precursor polyether; and
(8) The production method according to (4), (5), (6) or (7), wherein the amount of peroxides in the polyether before addition of the ascorbic acid and/or the derivative thereof (B) as determined by iodine-thiosulfate titration is 30 ppm or less.

The amount of peroxides is generally determined quantitatively according to the iodine-thiosulfate titration method described in R. M. Johnson and I. W. Siddiqi, The Determination Of Organic Peroxides, Pergamon Press, London, 1970 Chp. 3, for example, by using Model HP-10B kit manufactured by CHE Metrics Inc. The present invention is effective even at a peroxide amount of 30 ppm or less and sufficiently effective even at a peroxide amount of 20 ppm or less, or further 10 ppm or less. It is because the substance causing delay of the hydrosilylation reaction in focus of the present invention is not a peroxide but a double metal cyanide complex and/or the residue compound thereof.

### Advantageous effects of the invention

The present invention provides a simple method of producing a reactive silicon group-containing polyether polymer, allowing progress of hydrosilylation reaction in the downstream step by simple processing without prior removal of metal impurities from the metal impurity-containing polyether polymer and thus allowing simplification of the process of removing metal impurities.

### BEST MODE OF CARRYING OUT THE INVENTION

Hereinafter, the present invention will be described in detail. The main chain structure of the polyether (A) for use in the invention is not particularly limited if it is a polymer having a structure represented by -R-O- as its recurring unit, wherein R represents a bivalent organic group having 1 to 20 carbon atoms containing one or more atoms selected from the group consisting of hydrogen, oxygen, and nitrogen as its constituent atoms. The polymer may be a homopolymer wherein all recurring units are the same or a copolymer containing two or more kinds of recurring units. In addition, it may have branched structures on the main chain.

Typical examples of the recurring units represented by -R-O- include -CH₂CH₂O-, -CH(CH₃)CH₂O-, -CH(C₂H₅)CH₂O-, -C(CH₃)₂CH₂O-, -CH₂CH₂CH₂CH₂O-, and the like.

The component (A) according to the present invention is prepared by ring opening polymerization of an alkyleneoxide such as ethyleneoxide, propyleneoxide, a-butyleneoxide, β-butyleneoxide, hexeneoxide, cyclohexeneoxide, styreneoxide or a-methylstyreneoxide, and an alkyl, allyl or aryl glycidylether, specifically a substituted or unsubstituted epoxy compound having 2 to 12 carbon atoms such as methyl glycidylether, ethyl glycidylether, isopropyl glycidylether, butyl glycidylether, allyl glycidylether, or phenylglycidylether, in the presence of a double metal cyanide catalyst by using a bivalent alcohol or polyvalent alcohol, such as ethylene glycol, propylene glycol, butanediol, hexamethylene glycol, methallyl alcohol, hydrogenated bisphenol A, neopentylglycol, polybutadiene diol, diethylene glycol, triethylene glycol, polyethylene glycol, polypropylene glycol, polypropylene triol, polypropylene tetraol, dipropylene glycol, glycerol, trimethylolmethane, trimethylolpropane, or pentaerythritol, or a hydroxyl group-containing various polymer as initiator.

Examples of the double metal cyanide catalysts include Zn₃[Fe(CN)₆]₂, Zn₃[Co(CN)₆]₂, Fe[Fe(CN)₆], Fe[Co(CN)₆] and the like. More preferable is a compound having Zn₃ [Co (CN)₆]₂ (i.e., zinc hexacyanocobaltate complex) as the catalyst skeleton and organic ligands coordinated thereto.

Such a catalyst is prepared, for example, by allowing a metal halide salt to react with an alkali metal cyanometalate in water and then an organic ligand to coordinate the reaction product thus formed. The metal in the metal halide salt is preferably Zn (II) or Fe (II), particularly preferably Zn (II). The metal halide salt is particularly preferably zinc chloride. The metal for the cyanometalate in the alkali metal cyanometalate is preferably Co (III) or Fe (III), particularly preferably Co (III). The alkali metal cyanometalate is preferably potassium hexacyanocobaltate. The organic ligand is preferably an alcohol and/or an ether. Favorable is one or more solvents selected from alcohols such as tert-butyl alcohol, ethanol, sec-butyl alcohol, n-butyl alcohol, isobutyl alcohol, tert-pentyl alcohol, isopentyl alcohol and isopropyl alcohol; and ethers such as ethylene glycol dimethylether (hereinafter, glyme), diglyme (diethylene glycol dimethylether), triglyme (triethylene glycol dimethylether), dioxane, and polyethers having a number-average molecular weight of 150 to 5000. Particularly favorable among them are tert-butyl alcohol and/or glyme.

An antioxidant may be added to the polyether (A) obtained for prevention of oxidative degradation of the polyether. Examples of the antioxidant for use include phenol-based antioxidants such as 2,6-di-tert-butyl-p-cresol, 2,6-di-tert-butylphenol, 2,4-dimethyl-6-tert-butylphenol, 2,2'-methylene bis(4-methyl-6-tert-butylphenol), 4,4'-butylidene bis(3-methyl-6-tert-butylphenol), 4,4'-thiobis(3-methyl-6-tert-butylphenol), tetrakis{methylene-3(3,5-di-tert-butyl-4-hydroxyphenyl)prop ionato} methane, and 1,1,3-tris(2-methyl-4-hydroxy-5-tert-butylphenyl)butane; and the like.

The ascorbic acid or the derivatives thereof (B) for use in the present invention include L- ascorbic acid; its structural isomer isoascorbic acid; the ester derivatives thereof (such as L-ascorbyl palmitate, L-ascorbyl stearate, L-ascorbyl 2-ethylhexanoate, isoascorbyl palmitate, isoascorbyl stearate, and isoascorbyl 2-ethylhexanoate); the phosphate ester derivatives thereof (such as L-ascorbyl monophosphate, L-ascorbyl diphosphate, L-ascorbyl triphosphate, isoascorbyl monophosphate, isoascorbyl diphosphate, and isoascorbyl triphosphate); the ether derivatives thereof (specifically, L-ascorbic acid-2-glucoside and isoascorbic acid-2-glucoside); and the alkali-metal salts thereof such as of sodium or potassium; the alkali-earth metal salts thereof such as of magnesium, calcium or barium; and the various metal salts thereof such as of a polyvalent metal salt like aluminum and the like, and more preferable is L-ascorbic acid, isoascorbic acid or the metal salt thereof.

The ascorbic acid or the derivative thereof may be added at any time after polymerization of the polyether polymer, but is preferably added after introduction of an unsaturated group into the polyether polymer. The ascorbic acid or the derivative may be added in various ways, for example, as it is dissolved in a solvent or water or as it is, but is most preferably added as dissolved in a solvent such as methanol or ethanol.

The addition amount of the ascorbic acid or the derivative thereof varies according to the amount of the catalyst remaining in the polymer; excessive increase in addition amount is unfavorable because of color development of the polymer, while excessive decrease leads to undesirable influence on hydrosilylation in the downstream step; and thus, it is preferably, normally in the range of 10 to 1,000 ppm, more preferably 20 to 700 ppm.

The mixture after addition of the ascorbic acid or the derivative thereof is preferably stirred normally at a temperature in the range of 20 to 150° C, more preferably 40 to 120°C, for 5 hours or shorter, more preferably 0.5 to 2 hours.

Alternatively, the resin may be previously treated for reduction of the polymerization catalyst residue by water extraction, adsorption, or the like, before addition, and then, the residue polymerization catalyst be treated with ascorbic acid or the derivative thereof for removal thereof.

Favorable for preparing the component (C) by introducing an unsaturated group into the hydroxyl group-containing polyether polymer is, for example, a method of converting the hydroxyl group of the polyether polymer into -OM (M: Na or K) by metallation, and preparing an unsaturated group-containing polyether in reaction thereof with an organic halogen compound represented by General Formula (3):

H₂C=C(R⁴)-R³-Y or H(R⁴)C=CH-R³-Y (3)

(wherein, R³ represents a bivalent organic group having 1 to 20 carbon atoms and containing one or more atoms selected from the group consisting of hydrogen, oxygen, and nitrogen as its constituent atoms; R⁴ represents a hydrogen atom or a hydrocarbon having 10 or less carbon atoms; and Y represents a halogen atom).
The organic halogen compound is most preferably allyl chloride or methallyl chloride.

When the polyether is prepared by polymerization by using a compound having an active hydrogen group and an unsaturated bond in the molecule such as allyl alcohol as the initiator described above, it is possible to obtain the unsaturated group-containing polyether without the operation above.

The silane compound used for hydrosilylation of the unsaturated group-containing polyether is preferably a compound having one or more Si-H groups in the molecule. Typical examples thereof include the compounds represented by the following General Formula (1):

H-(SiR²_{2-b}X_{b}O)ₘ-Si(R¹₃₋ₐ)Xₐ (1)

(wherein, R¹ and R² each independently represent an alkyl group having 1 to 20 carbon atoms, an aryl group having 6 to 20 carbon atoms, an aralkyl group having 7 to 20 carbon atoms or a triorganosiloxy group represented by (R')₃SiO- ; the multiple groups R¹ or R², when present, may be the same as or different from each other; R' represents a monovalent hydrocarbon group having 1 to 20 carbon atoms, and the three groups R' may be the same as or different from each other; X represents a hydroxyl or hydrolytic group; the two or more groups X, when present, may be the same as or different from each other; a is 0, 1, 2 or 3; b is 0, 1, or 2; the numbers b in m groups (SiR²_{2-b}X_{b}O) may be the same as or different from each other; m is an integer of 0 to 19; however, the following formula is satisfied: a+Sb=1). A silicon atom may be bound to 1 to 3 hydrolytic or hydroxyl groups, and (a+Sb) is preferably in the range of 1 to 5. When two or more hydrolytic or hydroxyl groups are bound to a reactive silicon group, they may be the same as or different from each other.

The compounds represented by General Formula (2) are favorable, because they are readily available.

H-SiR¹_{3-c}X_{c} (2)

(wherein, R¹, X is the same as that above; c is 1, 2 or 3).

Typical examples thereof include halogenated silanes such as trichlorosilane, methyldichlorosilane, dimethylchlorosilane, phenyldichlorosilane, and trimethylsiloxymethylchlorosilane; alkoxysilanes such as trimethoxysilane, triethoxysilane, methyl diethoxysilane, methyldimethoxysilane, phenyldimethoxysilane, trimethylsiloxymethylmethoxysilane, and trimethylsiloxydiethoxysilane; acyloxysilanes such as methyldiacetoxysilane, phenyldiacetoxysilane, triacetoxysilane, trimethylsiloxymethyl acetoxysilane, and trimethylsiloxydiacetoxysilane; ketoximate silanes such as bis(dimethylketoximato)methylsilane, bis(cyclohexylketoximato)methylsilane, bis(diethylketoximato)trimethylsiloxysilane, bis(methylethylketoximato)methylsilane, and tris(acetoxymato)silane; alkenyloxysilanes such as methylisopropenyloxysilane; and the like. Among them, alkoxysilanes are particularly preferably, and among the alkoxy groups, a methoxy group is particularly preferable.

The hydrosilylation reaction in the present invention is carried out normally at a temperature in the range of 10 to 150° C, more preferably at 20 to 120° C, and most preferably 40 to 100° C; and solvents such as benzene, toluene, xylene, tetrahydrofuran, methylene chloride, pentane, hexane, and heptane are used as needed for regulation of reaction temperature and adjustment of the viscosity of reaction system.

For example, ametallocomplex catalyst selected from Group VIII transition metal elements such as platinum and rhodium is used as the catalyst used in reaction of the polyether polymer having an introduced unsaturated bond with the hydrolyzable silicon group-containing compound. Typical examples thereof for use include H₂PtCl₆·H₂O, platinum-vinylsiloxane complex, platinum-olefin complex, RhCl(PPh₃)₃, and the like; but H₂PtCl₆· 6H₂O and platinum-vinylsiloxane complex are particularly preferable from the point of hydrosilylation reactivity. The platinum-vinylsiloxane complex is a general term for the compounds containing a platinum atom and its ligands vinyl-containing siloxane, polysiloxane, or cyclic siloxane groups in the molecule, and typical examples of the ligands include1,1,3,3-tetramethyl-1,3-divinyldisiloxane and the like. The amount of the catalyst used is not particularly limited, but the platinum catalyst is normally, preferably used in an amount of 10⁻¹ to 10⁻⁸ mole with respect to 1 mole of the alkenyl group.

The hydrolyzable silicon group-containing polyether polymer thus prepared hardens by atmospheric moisture at room temperature in the presence of a curing catalyst, giving a film highly adhesive to metal, glass, and others, and thus, is useful as a film composition, sealing composition, paint composition, or adhesive composition for building, airplane, automobile, and others. Any one of known silanol condensation catalysts may be used as the curing catalyst. These catalysts may be used alone or in combination of two or more.

Various additives including plasticizer, filler, adhesiveness improver such as aminosilane, and dehydrating agent may be added as needed to the hydrolyzable silicon group-containing polyether polymer according to the present invention.

### EXAMPLES

The present invention will be described in detail with reference to typical Examples below, but it should be understood that the present invention is not limited thereby.

The amount of the peroxide used in the following Examples was determined quantitatively according to the following method.

First, approximately 5 g of a sample was weighed in a ground Erlenmeyer flask and dissolved in a mixture of 50 ml of chloroform and 20 ml of acetic acid added thereto. The flask was then substituted with nitrogen gas; after addition of 1 ml of saturated potassium iodide solution, the flask was sealed immediately and stirred approximately for 1 minute; and the amount of the peroxide as H₂O₂ in the solution was determined by titrating the solution with 0.01 N sodium thiosulfate solution by using a starch reagent solution as the indicator.

### (Preparative Example 1)

Propyleneoxide was allowed to react in ring-opening polymerization, by using polypropylene glycol having a number-average molecular weight of 3,000 as the initiator and a zinc hexacyanocobaltate glyme complex as the catalyst, to give a terminal hydroxyl group-containing polyether polymer having a number-average molecular weight of 12,000. Then, a methanol solution containing NaOMe in an amount of 1.2 equivalences with respect to the hydroxyl group of the terminal hydroxyl group-containing polyether polymer was added, and the methanol is evaporated; allyl chloride in an amount of 1.5 equivalences with respect to the hydroxyl group was added, allowing allylation of the terminal hydroxyl group, to give a metal impurity-containing unsaturated group-containing polyether(a). Analysis of the amount of the metals in the unsaturated group-containing polyether (a) revealed that the contents of Zn and Co, as determined by ICP emission electroscopic analysis, were respectively 26 ppm and 9.2 ppm.

### (Preparative Example 2)

300 g of hexane and 300 g of water were added to 100 g of the metal impurity-containing unsaturated group-containing polyether (a), and the mixture was agitated for 20 minutes. After the mixture was left still, the hexane phase was removed; hexane was evaporated under reduced pressure, to give a metal impurity-containing unsaturated group-containing polyether(b). The amounts of the metal ions, Zn and Co, in the unsaturated group-containing polyether (b) were respectively 4.1 and 1.1 ppm, and the amount of the peroxide was 10 ppm or less.

### (Preparative Example 3)

Polypropylene glycol having a number-average molecular weight of 3,000 polymerized by using a caustic alkali as a catalyst and dichloromethane were allowed to react with each other in molecule chain-extending reaction in the presence of alkali, to give a terminal hydroxyl group-containing polyether polymer having a number-average molecular weight of 9,000. Then, a methanol solution containing NaOMe in an amount of 1.2 equivalences with respect to the hydroxyl group of the terminal hydroxyl group-containing polyether polymer was added thereto, and the methanol is evaporated; and allyl chloride in an amount of 1. 5 equivalences with respect to the hydroxyl group was added then, allowing allylation of the terminal hydroxyl group, to give an unsaturated group-containing polyether. An unsaturated group-containing polyether (c) was prepared from the unsaturated group-containing polyether obtained, in a similar manner to Preparative Example 2. The unsaturated group-containing polyether (c) did not contain Zn or Co.

### (Example 1)

50 g of the unsaturated group-containing polyether (a) obtained in Preparative Example 1, 1 g of hexane, and 630 µl of ascorbic acid (5% methanol solution) were placed in a 200 ml round-bottomed flask, and the mixture was heated at 90° C under reduced pressure for evaporation of the volatile matter and stirred for 1 hour. Then, the flask was substituted with N₂, and 23 µl of platinum-vinylsiloxane complex (Pt: 1 wt %/isopropanol (hereinafter, IPA)) was added thereto, and the mixture was stirred; and 1. 2 g of dimethoxymethylsilane was added gradually thereto. The mixture solution was allowed to react at 90° C for 1 hour, to give a silyl group-containing polyether polymer. Analysis of the residue allyl group content in the polymer by NMR revealed an unreacted allyl group rate of 1%.

### (Example 2)

The unsaturated group-containing polyether (b) obtained in Preparative Example 2 was placed in a 200 ml round-bottomed flask and treated in a similar manner to Example 1; and analysis of the residue allyl group content of the polymer by NMR showed an unreacted allyl group rate of less than 1%.

### (Comparative Example 1)

50 g of the unsaturated group-containing polyether (a) obtained in Preparative Example 1 and 1 g of hexane were placed in a 200-ml round-bottomed flask and heated to 90° C under reduced pressure for evaporation of the volatile matter. The flask was then substituted with N₂, and 23 µl of platinum-vinylsiloxane complex (Pt: 1 wt% /isopropanol (hereinafter, IPA)) was added thereto, and the mixture was stirred; and 1.2 g of dimethoxymethylsilane was added gradually thereto. The mixture solution was allowed to react at 90° C for 1 hour, to give a silyl group-containing polyether polymer. Analysis of the residue allyl group content in the polymer by NMR revealed an unreacted allyl group rate of 23%.

### (Comparative Example 2)

The unsaturated group-containing polyether (b) obtained in Preparative Example 2 was placed in a 200 ml round-bottomed flask and treated in a similar manner to Comparative Example 1, and analysis of the residue allyl group content of the polymer by NMR showed an unreacted allyl group rate of 8%.

### (Reference Example)

The unsaturated group-containing polyether (c) obtained in Preparative Example 3 was treated in a similar manner to Comparative Example 1, except that dimethoxymethylsilane was used in an amount of 1.6 g; and analysis of the residue allyl group content of the polymer by NMR showed an unreacted allyl group rate of less than 1%. The unsaturated group-containing polyethers treated with ascorbic acid (Examples 1 and 2) were hydrosilylated at a higher yield than those without ascorbic acid treatment (Comparative Examples 1 and 2).

## Claims

1. A composition, comprising a polyether (A) containing a double metal cyanide complex and/or the residue compound thereof that is prepared in polymerization by using a double metal cyanide complex as the catalyst and ascorbic acid and/or the derivative thereof (B).

2. A composition, comprising an unsaturated group-containing polyether (C) having a polyether main chain prepared by using a double metal cyanide complex as the catalyst and containing the double metal cyanide complex and/or the residue compound thereof and ascorbic acid and/or the derivative thereof (B).

3. The composition according to Claim 1 or 2, wherein the amount of peroxides in the polyether before addition of the ascorbic acid and/or the derivative thereof (B) as determined by iodine-thiosulfate titration is 30 ppm or less.

4. A method of producing a hydrolyzable silicon group-containing polyether (D) by preparing a polyether in polymerization by using a double metal cyanide complex as the catalyst, preparing an unsaturated group-containing polyether (C) by using the polyether as the precursor polyether, and hydrosilylating the unsaturated group-containing polyether (C) with a silane compound represented by the following General Formula (1), comprising a step of heating the unsaturated group-containing polyether (C) or the precursor polyether in the presence of ascorbic acid and/or the derivative thereof (B).
H-(SiR²_{2-b}X_{b}O)ₘ-Si(R¹₃₋ₐ)Xₐ (1)
(wherein, R¹ and R² each independently represent an alkyl group having 1 to 20 carbon atoms, an aryl group having 6 to 20 carbon atoms, an aralkyl group having 7 to 20 carbon atoms or a triorganosiloxy group represented by (R') ₃SiO-; the multiple groups R¹ or R², when present, may be the same as or different from each other; R' represents a monovalent hydrocarbon group having 1 to 20 carbon atoms, and the three groups R' may be the same as or different from each other; X represents a hydroxyl or hydrolytic group; the two or more groups X, when present, may be the same as or different from each other; a is 0, 1, 2 or 3; b is 0, 1, or 2; the numbers b in m groups (SiR²_{2-b}X_{b}O) may be the same as or different from each other; m is an integer of 0 to 19; however, the following formula is satisfied: a+Sb= 1)

5. The production method according to Claim 4, wherein the silane compound is a compound represented by the following General Formula (2):
H-SiR¹_{3-c} X_{c} (2)
(wherein, R¹, X is the same as that above; and c is 1, 2 or 3).

6. The production method according to Claim 4 or 5, wherein the unsaturated group-containing polyether (C) or the precursor polyether thereof is heated in the presence of ascorbic acid and/or the derivative thereof (B) at 20 to 150° C for 0 to 5 hours.

7. The production method according to Claim 4, 5 or 6, wherein the weight concentration of the ascorbic acid and/or the derivative thereof (B) when the unsaturated group-containing polyether (C) or the precursor polyether thereof is heated in the presence of ascorbic acid and/or the derivative thereof is 10 to 1,000 ppm with respect to the total amount of the unsaturated group-containing polyether (C) and the precursor polyether.

8. The production method according to Claim 4, 5, 6 or 7, wherein the amount of peroxides in the polyether before addition of the ascorbic acid and/or the derivative thereof (B) as determined by iodine-thiosulfate titration is 30 ppm or less.
